# EUROPÄISCHE PATENTSCHRIFT

(11) **EP 1 093 428 B1**
(45) Veröffentlichungstag und Bekanntmachung des Hinweises auf die Patenterteilung: **01.10.2003**
(21) Anmeldenummer: 99936472.2
(22) Anmeldetag: 02.07.1999
(51) Int. Cl.: B60T 8/36, F16K 31/06, G01L 9/00

(54) **BREMSDRUCKSTEUERGERÄT**
DEVICE FOR CONTROLLING BRAKE PRESSURE
REGULATEUR DE FREINAGE

(30) Priorität: 08.07.1998 DE 19830464; 09.07.1998 DE 19830749; 26.10.1998 DE 19849287
(43) Veröffentlichungstag der Anmeldung: 25.04.2001
(73) Patentinhaber: Continental Teves AG & Co. oHG, 60488 Frankfurt (DE)
(72) Erfinder: DINKEL, Dieter, D-65817 Eppstein (DE); HINZ, Axel, D-61267 Neu-Anspach (DE); REINARTZ, Hans-Dieter, D-60439 Frankfurt (DE)
(86) Internationale Anmeldenummer: EP9904599
(87) Internationale Veröffentlichungsnummer: WO00002755

(56) Entgegenhaltungen:
- EP-A- 0 233 166
- EP-A- 0 816 142
- EP-A- 0 845 397
- DE-A- 3 136 174
- DE-A- 19 514 383

## Beschreibung

Die Erfindung betrifft ein Bremsdrucksteuergerät, insbesondere zur Blockierdruckregelung und zum automatischen Bremseneingriff zwecks Antriebsschlupf- und/oder Fahrdynamikregelung in Kraftfahrzeug-Bremssystemen, nach dem Oberbegriff des Patentanspruchs 1.

Aus der DE 42 32 311 C1 ist bereits eine hydraulische Kraftfahrzeug-Bremsanlage mit einer Blockierschutzeinrichtung hervorgegangen, die überdies zur Verbesserung des Fahrzeugspurverhaltens mit einem automatischen Bremseneingriff zur Fahrdynamikregelung versehen ist. Sowohl zur Fahrdynamikregelung als auch zur Antriebsschlupfregelung bedarf es besonderer Maßnahmen, um hinreichend schnell das für den Bremseneingriff nötige. Druckmittel mittels einer Pumpe bereitzustellen. Hierzu gehört u.a. die Anordnung eines Drucksensors an dem vom Bremsdruckgeber kommenden Druckmittelpfad, um den vom Fahrer im Bremsdruckgeber jeweils erzeugten Vordruck zu erfassen.

Eine konstruktive Ausführungsvariante zur Anordnung eines Drucksensors an einer speziellen Vorladeeinrichtung für ein Kraftfahrzeug-Bremssystem ist in der Zeitschrift ATZ, 96. Jahrgang (1994) Nr. 11 auf Seite 687, gezeigt. Durch die Anordnung des Drucksensors am Gehäuse der sogenannten Ladekolbeneinheit bedarf es in der Regel einer aufwendigen Verkabelung mit der Steuer- und Regelelektronik.

Weiterhin ist in der DE 195 14 383 A1 ein Bremsdrucksteuergerät beschrieben, das in einem Gehäuse mehrere Aufnahmebohrungen für in Ventilreihen angeordnete Druckmodulationsventile aufweist. Ferner sind Drucksensoren außerhalb den Ventilreihen im Gehäuse angeordnet, womit der Grundriß des Gehäuses und die Kanalverbohrung des blockförmigen Gehäuses an die gewählte Drucksensoranordnung anzupassen ist. Durch die zwangsläufige Vergrößerung der Gehauseabmessung muß überdies der das Gehäuse verschließende Deckel und die darin befindliche Elektronik angepaßt werden. Die Bohroperation für das Kanalsystem gestaltet sich umfangreich.

Aus der gattungsbildenden EP-A-0845397 geht ein Bremsdrucksteuergerät hervor, das in einer Aufnahembohrung eines blockförmigen Gehäuse einen Drucksensor aufnimmt, der den Druck zwischen einer Druckluftbevorratung und einem parallel zum Drucksensor im Gehäuse eingesetzten Elektromagnetventil erfaßt. Ein weiteres Elektromagnetventil befindet sich gleichfalls in Parallelanordnung zum Drucksensor an der Stirnfläche des Gehäuses. Die beiden an der Gehäusestirnfläche befestigten Elektromagnetventile und der zwischen den Elektromagnetventilen angeordnete Drucksensor sind mittels elektrischer Kontakte an einer elektronischen Steuereinheit angeschlossen, die sich innerhalb eines Deckels befindet, der auf der die Elektomagnetventile und den Drucksensor aufweisenden-Gehäusestirnfläche aufgesetzt ist.
Die Anordnung des Drucksensors zwischen den Elektromagnetventilen führt zwangsläufig zu einem sehr großen Ventilabstand und damit zu einer nachteiligen Gehäuse- als auch Deckelgröße, wodurch auch der Werkstoffbedarf sowie das Gewicht des blockförmigen Gehäuses und des Deckels groß ist.

Daher ist es die Aufgabe der vorliegenden Erfindung, ein Bremsdrucksteuergerät der eingangs genannten Art derart zu gestalten, daß vorgenannte Nachteile vermieden werden.

Diese Aufgabe wird erfindungsgemäß für das Bremsdrucksteuergerät der angegebenen Art mit den kennzeichnenden Merkmalen des Patentanspruchs 1 gelöst.

Weitere Merkmale und zweckmäßige Ausgestaltungsvarianten der Erfindung gehen aus den Unteransprüchen hervor, die anhand mehrerer Zeichnungen nachfolgend erläutert werden.

Es zeigen:
- Fig. 1: ein Bremsdrucksteuergerät mit Teilschnittdarstellung im Bereich einer ersten vorgeschlagenen Anschlußstelle für einen Drucksensor an einer Gehäuseseitenfläche,
- Fig. 2: eine Draufsicht auf das Bremsdrucksteuergerät nach Fig. 1 auf die in Fig. 1 angedeutete Schnittebene BB des Gehäuseblocks.

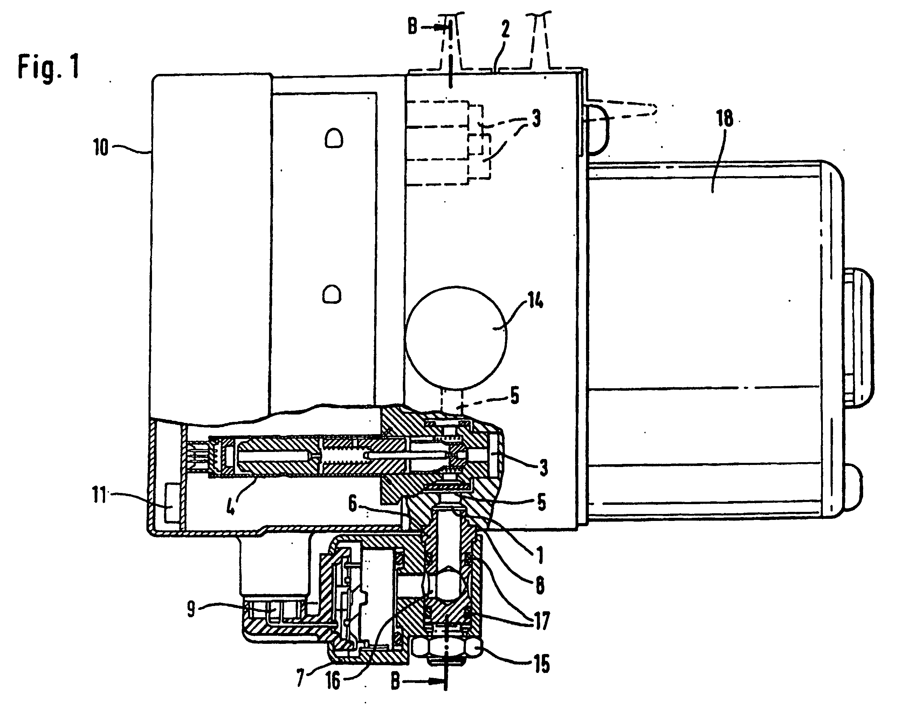

Die Fig. 1 zeigt in erheblich vergrößerter Darstellung ein Bremsdrucksteuergerät für ein hydraulisches Kraftfahrzeug-Bremssystem, das an einen Bremsdruckgeber angeschlossen ist, der über im Bremsdrucksteuergerät eingesetzte Druckmodulationsventile 4 mit mehreren Radbremsen und einem Druckmittelspeichersystem hydraulisch verbunden ist, das an einer Saugseite einer motorgetriebenen Pumpe 14 angeschlossen ist, die mit ihrer Druckseite eine Verbindung zum Bremsdruckgeber aufweist. Sowohl die Pumpe 14 als auch das Druckmittelspeichersystem sind im Bremsdrucksteuergerät integriert. Die im blockförmigen Gehäuse 2 zwischen den Reihen der Druckmodulationsventile 4 integrierte Pumpe 14 steht mit ihrer Druckseite mit einem vom Bremsdruckgeber zu den Radbremsen führenden Druckmittelpfad 5 in Verbindung, der zu den Druckmodulationsventilen 4 im Gehäuse 2 und einem schaltungstechnisch zwischen dem Bremsdruckgeber und den Druckmodulationsventilen 4 am Druckmittelpfad 5 angeschlossenen Drucksensor 7 führt. Der Drucksensor 7 ist an einer in das Gehäuse 2 gerichteten Drucksensoranschlußöffnung 1 angebracht, die von der Stirnfläche des Gehäuses 2 kommend in den Druckmittelpfad 5 einmündet. Die Drucksensoranschlußöffnung 1 befindet sich zwischen den in das Gehäuse 2 gerichteten Aufnahmebohrungen 3, die für die Druckmodulationsventile 4 vorgesehen sind. Eines der Druckmodulationsventile 4 ist gleichfalls in einer Schnittdarstellung im Vordergrund des Gehäusebereichs mit dem Drucksensor 7 gezeigt. In vorliegendem Ausführungsbeispiel nach Fig.1 ist vorgeschlagen, die Drucksensoranschlußöffnung 1 quer und damit vorzugsweise rechtwinklig zu der in der Schnittdarstellung gezeigten Aufnahmebohrung 3 für das Druckmodulationsventil 4 in das Gehäuse 2 einzuführen, wobei die Drucksensoranschlußöffnung 1 unmittelbar in den gehäuseseitigen Druckmittelpfad 5 einmündet, der zwischen der abgebildeten Aufnahmebohrung 3 und einer dahinter in einer Ventilreihe gelegenen weiteren Aufnahmebohrung 3 in das Gehäuse 2 eindringt. In die Drucksehsoranschlußöffnung 1 ist ein im wesentlichen hülsenförmiger Adapter 6 mittels einer Selbsteinscherung befestigt, der an seinem aus der Drucksensoranschlußöffnung 1 hervorstehenden Fortsatz den Drucksensor 7 trägt. Der Drucksensor 7 ist auf dem aus der Drucksensoranschlußöffnung 1 hervorstehenden hülsenförmigen Abschnitt des Adapters 6 kraftschlüssig mittels einer Schraubverbindung befestigt. Zur Ausrichtung des Drucksensors 7 and des Adapter 6 am Gehäuse 2 ist im vorliegenden Ausführungsbeispiel eine Justierung 8 in Form eines adapterseitigen Außensechskants und eines gehäuseseitigen Innen-sechskants angebracht, der den Drucksensor 7 mit seinem elektrischen Anschluß 9 in einer gewünschten Drehrichtungslage in Richtung des auf dem Gehäuse 2 aufgesetzten Deckels 10 positioniert. Hierzu weist der Drucksensor 7 einen den Adapter 6 umgreifenden Ringgehäuseabschnitt auf, an den sich das zylinderförmige, das Sensorelement als auch elektrischen bzw. elektronische Teile des Drucksensors 7 aufnehmende Sensorgehäuse anschließt. Der Drucksensor 7 bildet somit eine eigenständig handhabbare Unterbaugruppe zur einfachen Befestigung am Gehäuse 2 und zur sicheren elektrischen Kontaktierung des im Deckel 7 angebrachten elektronischén Reglers, von dem symbolisch ein elektronisches Bauteil gezeigt ist. Im vorliegenden Ausführungsbeispiel nach Fig. 1 hat der am Adapter 6 angebrachte Außensechskant überdies die Funktion, das Drehmoment beim Anschrauben der Mutter 16 auf das am Sensorgehäuse hervorstehende Gewindestück am Adapter 6 aufzunehmen, wobei der Außensechskant nach dem Einpressen des Adapters 6 in die Drucksensoranschlußöffnung 1 zusätzlich verstemmt werden kann, um die Preßverbindung im Bereich der Selbstverstemmung aufgrund der hohen hydraulischen Drücke zu entlasten. Das Sensorgehäuse ist im Bereich des Außensechskants an den Adapter 6 angepaßt, wozu ein Innensechskant am Ringgehäuseabschnitt des Drucksensors 7 vorgesehen ist, so daß eine einfache Ausrichtung zur elektrischen Verbindung mit dem elektronischen Regler bereits beim Aufstecken des Drucksensors 7 auf den Adapter 6 gewährleistet ist. Ein weiterer Vorteil der abbiledungsgemäßen Anordnung des Drucksensors 7 ist darin zu sehen, daß nach der Bohroperation des Gehäuses 2 ein Blindstopfen bzw. eine Verschlußkugel durch die Anordnung der Drucksensoranschlußöffnung 1 an dieser Stelle nicht notwendig ist. Dadurch, daß der Drucksensor 7 nach dem Prinzip eines Winkelsteckers an der Seitenfläche des Gehäuses 2 angebracht ist, ergibt sich keine nennenswerte Verbreiterung des gesamten Bremsdrucksteuergerätes. Dies hat zur Folge, daß mittels einer einfachen, starren elektrischen Steckverbindung der elektrische Anschluß 9 des Drucksensors 7 als Winkelstecker unmittelbar in den Gegenstecker an der Seitenfläche des Deckels 10 eingreift, der mit den elektrischen bzw. elektronischen Bauteilen 11 innerhalb des Deckels 10 verbunden ist.

Auf die zuvor beschriebene Justierung 8 kann gegebenenfalls dann verzichtet werden, wenn die elektrische Verbindung 9 über flexible Kabelstränge zum Regler erfolgt. Zur Abdichtung des Drucksensors 7 am Adapter 6 sind beiderseits der Druckmeßstelle 16 am Hülsenabschnitt O-Ringe 17 angeordnet.

Ferner geht aus Figur 1 die Anordnung und konstruktive Ausführung eines der Druckmodulationsventile 4 hervor.

Zunächst soll auf den besonders kompakten Gesamtaufbau des Bremsdrucksteuergeräts eingegangen werden, der sich durch das schmale, blockförmige Gehäuse 2 auszeichnet, an dem abbildungsgemäß zur rechten Stirnseite ein Elektromotor 18 zum Antrieb der Pumpe 14 angeflanscht ist, dessen elektrische Verbindung durch eine Bohrung im Gehäuse 2 zur entgegengelegenen Gehäusestirnseite und damit zum elektronischen Regler im Deckel 10 führt. Hierdurch ergeben sich vorteilhafterweise keine peripher verlegten Kabel, sondern ausschließlich ein integrierter Elektrostecker.

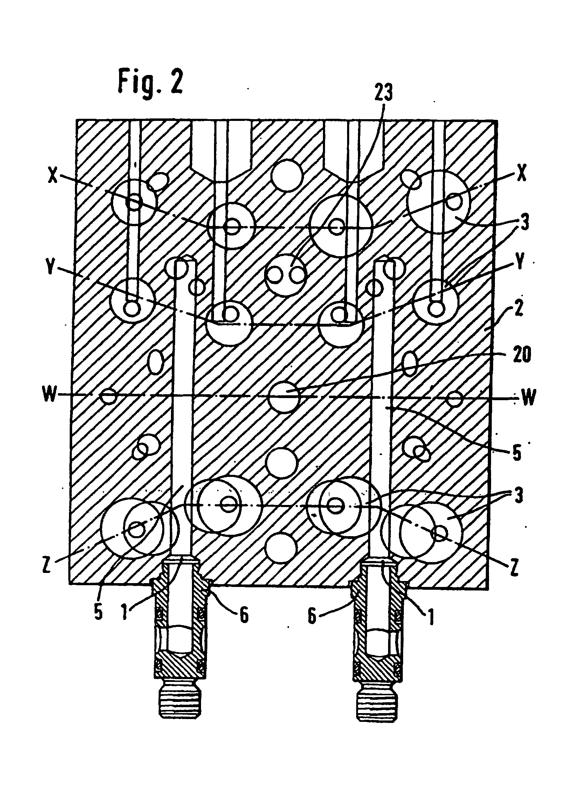

In der Abbildung nach Fig. 2 ist der Grundriß des blockförmigen Gehäuses 2 an der aus Figur 1 bekannten Schnittstelle BB in rechtwinklig aus der Zeichnungsebene geklappter Draufsicht gezeigt. Die abbildungsgemäße Schnittfläche des Gehäuses 2 beinhaltet in einer ersten und zweiten Ventilreihe X,Y insgesamt acht Aufnahmebohrungen 3. In der ersten Ventilreihe X werden elektromagnetisch betätigbare Einlaßventile und in der zweiten Ventilreihe Y Auslaßventile eingesetzt. Neben und damit außerhalb zu den beiden Ventilreihen X,Y befindet sich in einer etwas tiefer gelegenen Schnittebene eine horizontale Pumpenaufnahmebohrung, die von zwei parallelen Speicheraufnahmebohrungen verdeckt wird. Die Speicheraufnahmebohrungen befinden sich achsparallel zu den Ventilaufnahmebohrungen sowie seitlich der beiden Ventilreihen X,Y, während sich die Pumpenaufnahmebohrung entlang der Achse W parallel zu den Ventilreihen X,Y, erstreckt. Zwischen den beiden Speicheraufnahmebohrungen befindet sich ferner mittig eine Motoraufnahmebohrung 20, die sich achsparallel zu den Speicheraufnahmebohrungen als erweiterte Stufenbohrung auf der abbildungsgemäß entgegengelegenen Gehäusestirnfläche erstreckt. Die somit senkrecht auf die Pumpenbohrung gerichtete Motoraufnahmebohrung nimmt nicht nur den in Fig. 1 gezeigten Elektromotor 18 auf, sondern auch den für die Pumpe erforderlichen Exzenter- bzw. Kurbelantrieb.

Die unmittelbar neben der Pumpenachse W und den Speicheraufnahmebohrungen gelegene zweite Ventilreihe Y nimmt die für den Bremsdruckabbau in den Radbremsen erforderlichen Auslaßventile auf. Die Einlaßventile befinden sich in den Aufnahmebohrungen 3 der ersten Ventilreihe X, die durch die zweite Ventilreihe Y von der Pumpenaufnahmebohrung und den Speicheraufnahmebohrungen räumlich beabstandet sind. Die Anordnung der Einlaßventile in der ersten Ventilreihe X hat den Vorteil, daß die in Nähe der ersten Ventilreihe X in das blockförmige Gehäuse 2 einmündenden Anschlüsse des Bremsdruckgebers und die zu den Radbremsen führenden Anschlüsse gleichfalls möglichst dicht beieinander liegen, womit sich ein einheitliches Anschlußbild für die Bremsleitungen an einer Seitenfläche des blockförmigen Gehäuses 2 ergibt.

Aus den Fig. 2 geht ferner eine dritte Ventilreihe Z hervor, die entfernt von der ersten und zweiten Ventilreihe X,Y in die Gehäusefläche einmündet. Die somit unmittelbar neben den beiden Speicheraufnahmebohrungen angeordnete dritte Ventilreihe Z gewährleistet eine einfache funktionelle Erweiterung des für Blockierdruckregelung ausgelegten Bremsdrucksteuergeräts zum Zwecke einer Antriebschlupf- und Fahrdynamikregelung, wozu in den beiden äußeren Aufnahmebohrungen 3 der dritten Ventilreihe Z als elektrische Umschaltventile ausgeführte, in Grundstellung geschlossene Magnetventile eingesetzt werden (siehe hierzu auch Fig.1). In den beiden dazwischenliegenden Aufnahmebohrungen der Ventilreihe Z werden in Grundstellung geöffnete Magnetventile eingesetzt.

Die Fig. 2 zeigt die zwischen den einzelnen Aufnahmebohrungen 3 parallel verlaufenden Druckmittelpfade 5 beider Bremskreise im seitlichen Austrittsbereich des blockförmigen Gehäuses 2 mittels den auf Adaptern 6 angeordneten Drucksensoren 7 verschlossen werden, so daß unter exakter Beibehaltung des bestehenden Kanalsystems im Gehäuse 2 einfache Anschlußmöglichkeiten zur Drucksensierung geschaffen werden. Dies führt zwangsläufig dazu, daß unter Beibehaltung des ursprünglichen Aufbaus des Bremsdrucksteuergerätes auf verblüffend einfache Weise bisherige Blindverschlüsse nach Beendigung der Bohroperation durch Drucksensoranschlüsse ersetzt werden, die nur zu einem geringfügigen Überstand am Gehäuse 2 führen.

### Bezugszeichenliste

- 1: Drucksensoranschlußöffnung
- 2: Gehäuse
- 3: Aufnahmebohrung
- 4: Druckmodulationsventil
- 5: Druckmittelpfad
- 6: Adapter
- 7: Drucksensor
- 8: Justierung
- 9: Anschluß
- 10: Deckel
- 11: Elektrische Bauteile
- 14: Pumpe
- 15: Mutter
- 16: Druckmeßstelle
- 17: O-Ring
- 18: Elektromotor
- 20: Motoraufnahmebohrung
- X,Y,Z: Ventilreihe
- W: Pumpenachse

## Patentansprüche

1. Bremsdrucksteuergerät, insbesondere zur Blockierdruckregelung und zum automatischen Bremseneingriff zwecks Antriebsschlupf- und/oder Fahrdynamikregelung in Kraftfahrzeug-Bremssystemen, mit in einem blockförmigen Gehäuse (2) angeordneten Aufnahmebohrungen (3) für Druckmodulationsventile (4), mit in das Gehäuse (2) führenden Drucksensoranschlußöffnungen (1), in die Drucksensoren (7) zur Erfassung des Drucks in einem gehäuseseitigen, jeweils mit einem Bremsdruckgeber verbundenen Druckmittelpfad (5) eingesetzt sind, wobei zumindest eine der Drucksensoranschlußöffnungen (1) zwischen zwei der in das Gehäuse (2) gerichteten Aufnahmebohrungen (3) für die Druckmodulationsventile in den Druckmittelpfad (5) einmündet, **dadurch gekennzeichnet, daß** die Dructesensoranschlußöffnung (1) quer zu den Aufnahmebohrungen (3) für die Druckmodulationsventile (4) in das Gehäuse (2) gerichtet ist.

2. Bremsdrucksteuergerät nach Anspruch 1, **dadurch gekennzeichnet, daß** die Drucksensoranschlußöffnung (1) unmittelbar in den gehäuseseitigen Druckmittelpfad (5) einmündet, der den am Gehäuse (2) angeschlossenen Bremsdruckgeber mit der Aufnahmebohrung (3) eines Druckmodulationsventils (4) verbindet.

3. Bremsdrucksteuergerät nach Anspruch 1, **dadurch gekennzeichnet, daß** in die Drucksensoranschlußöffnung (1) ein im wesentlichen hülsenförmiger Adapter (6) kraft- und/oder formschlüssig eingesetzt ist, der an seinem aus der Drucksensoranschlußöffnung (1) hervorstehenden Fortsatz den Drucksensor (7) trägt.

4. Bremsdrucksteuergerät nach Anspruch 3, **dadurch gekennzeichnet, daß** auf den aus der Drucksensoranschlußöffnung (1) hervorstehenden hülsenförmigen Abschnitt des Adapters (6) der Drucksensor (7) kraftund/oder formschlüssig befestigt ist.

5. Bremsdrucksteuergerät nach Anspruch 3, **dadurch gekennzeichnet, daß** zur Ausrichtung des Drucksensors (7) am Adapter (6) eine Justierung (8), insbesondere ein Sechskant angebracht ist, der den Drucksensor (7) mit seinem elektrischen Anschluß (9) in einer gewünschten Drehrichtungslage zum Gehäuse (2) positioniert.

6. Bremsdrucksteuergerät nach Anspruch 3, **dadurch gekennzeichnet, daß** der Drucksensor (7) einen Ringgehäuseabschnitt aufweist, der auf den Adapter(6) aufgesetzt und verschraubt-ist.

7. Bremsdrucksteuergerät nach Anspruch 1, **dadurch gekennzeichnet, daß** am Gehäuse (2) ein Deckel (10) befestigt ist, der auf den Druckmodulationsventilen (4) angeordnet ist, und daß im Deckel elektrische und/oder elektronische Bauteile (11) vorgesehen sind, die eine elektrische Verbindung zum Drucksensor (1) aufweisen.

## Claims

1. Brake pressure control device, more particularly, for anti-lock pressure control and for automatic brake intervention for the purpose of traction slip control and/or driving dynamics control in automotive vehicle brake systems, including accommodating bores (3) for pressure modulation valves (4) arranged in a block-shaped housing (2), pressure sensor connecting ports (1) which lead into the housing (2) and into which pressure sensors (7) are inserted that sense the pressure in a housing-side pressure fluid conduit (5) respectively connected to a brake pressure generator, wherein at least one of the pressure sensor connecting ports (1) opens into the pressure fluid conduit (5) between two of the accommodating bores (3) for the pressure modulation valves that are directed into the housing (2),
**characterized in that** the pressure sensor connecting port (1) extends into the housing (2) transversely to the accommodating bores (3) for the pressure modulation valves (4).

2. Brake pressure control device as claimed in claim 1,
**characterized in that** the pressure sensor connecting port (1) opens directly into the housing-side pressure fluid conduit (5) which connects the brake pressure generator connected to the housing (2) to the accommodating bore (3) of a pressure modulation valve (4).

3. Brake pressure control device as claimed in claim 1,
**characterized in that** a generally sleeve-shaped adapter (6) is inserted into the pressure sensor connecting port (1) in operative and/or form-locking engagement therewith, the said adapter carrying the pressure sensor (7) at its extension projecting from the pressure sensor connecting port (1).

4. Brake pressure control device as claimed in claim 3,
**characterized in that** the pressure sensor (7) is attached in an operative and/or form-locking fashion to the sleeve-shaped portion of adapter (6) which projects from the pressure sensor connecting port (1).

5. Brake pressure control device as claimed in claim 3,
**characterized in that** for aligning the pressure sensor (7), an adjustment means (8), having especially a hexagonal contour, is provided on the adapter (6) and positions the pressure sensor (7) with its electrical connection (9) in a desired direction of rotation position relative to the housing (2).

6. Brake pressure control device as claimed in claim 3,
**characterized in that** the pressure sensor (7) includes an annular housing portion which is seated and screwed on the adapter (6).

7. Brake pressure control device as claimed in claim 1,
**characterized in that** a cover (10) is secured to the housing (2) and arranged on the pressure modulation valves (4), and **in that** the cover houses electric and/or electronic components (11) which have an electrical connection to the pressure sensor (1).

## Revendications

1. Appareil de commande de la pression de freinage, en particulier pour la régulation de la pression de blocage et pour l'intervention automatique du freinage en vue de la régulation du glissement d'entraînement et/ou de la dynamique de marche dans des systèmes de freinage de véhicule automobile, comportant des perçages de réception (3), disposés dans un boîtier (2) en forme de bloc, pour des soupapes de modulation de pression (4), comportant des ouvertures de raccord pour capteurs de pression (1) menant au boîtier (2), dans lesquelles sont insérés des capteurs de pression (7) destinés à détecter la pression dans une voie de fluide sous pression (5) côté boîtier, reliée à un capteur de pression de freinage, l'une au moins des ouvertures de raccord au capteur de pression (1) débouchant dans la voie de fluide sous pression (5), entre deux des perçages de réception (3) dirigés dans le boîtier (2), pour les soupapes de modulation de pression, **caractérisé en ce que** l'ouverture de raccord pour capteur de pression (1) est orientée transversalement aux perçages de réception (3) pour les soupapes de modulation de pression (4) dans le boîtier (2).

2. Appareil de commande de la pression de freinage selon la revendication 1, **caractérisé en ce que** l'ouverture de raccord pour capteur de pression (1) débouche directement dans la voie de fluide sous pression (5), côté boîtier, qui relie le capteur de pression de freinage raccordé au boîtier (2) au perçage de réception (3) d'une soupape de modulation de pression (4).

3. Appareil de commande de la pression de freinage selon la revendication 1, **caractérisé en ce que** dans l'ouverture de raccord pour capteur de pression (1), est inséré à force et/ou par complémentarité de forme un adaptateur (6) sensiblement en forme de douille, qui porte le capteur de pression (7) sur son prolongement dépassant de l'ouverture de raccord pour capteur de pression (1).

4. Appareil de commande de la pression de freinage selon la revendication 3, **caractérisé en ce que** le capteur de pression (7) est fixé à force et/ou par complémentarité de forme sur la portion en forme de douille, dépassant de l'ouverture de raccord pour capteur de pression (1), de l'adaptateur (6).

5. Appareil de commande de la pression de freinage selon la revendication 3, **caractérisé en ce que** pour l'orientation du capteur de pression (7) sur l'adaptateur (6), il est placé un organe d'ajustage (8), en particulier un hexagone, qui positionne le capteur de pression (7) par son raccord électrique (9) dans une position de rotation voulue, par rapport au boîtier (2).

6. Appareil de commande de la pression de freinage selon la revendication 3, **caractérisé en ce que** le capteur de pression (7) comporte une portion de boîtier annulaire qui est placée et vissée sur l'adaptateur (6).

7. Appareil de commande de la pression de freinage selon la revendication 1, **caractérisé en ce que** sur le boîtier (2) est fixé un couvercle (10) qui est disposé sur les soupapes de modulation de pression (4), et **en ce que** dans le couvercle sont prévus des composants (11) électriques et/ou électroniques qui comportent une liaison électrique avec le capteur de pression (1).
